(19) **Europäisches Patentamt European Patent Office Office européen des brevets**

(11) **EP 3 839 887 B1**

(12) **FASCICULE DE BREVET EUROPEEN**

(45) Date de publication et mention de la délivrance du brevet:
**29.01.2025 Bulletin 2025/05**

(21) Numéro de dépôt: **20214382.2**

(22) Date de dépôt: **15.12.2020**

(51) Classification Internationale des Brevets (IPC):
**G06T 7/20** *(2017.01)*

(52) Classification Coopérative des Brevets (CPC):
**G06T 7/20**

(54) **PROCEDE ET DISPOSITIF DE CALIBRAGE D'UN SYSTEME DE SUIVI COLLABORATIF DE CIBLES**

VERFAHREN UND VORRICHTUNG ZUR KALIBRIERUNG EINES KOLLABORATIVEN NACHVERFOLGUNGSSYSTEMS VON ZIELEN

METHOD AND DEVICE FOR CALIBRATING A SYSTEM FOR COLLABORATIVE MONITORING OF TARGETS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **16.12.2019 FR 1914511**

(43) Date de publication de la demande:
**23.06.2021 Bulletin 2021/25**

(73) Titulaire: **Bull SAS**
**78340 Les Clayes-sous-Bois (FR)**

(72) Inventeurs:
• **TROLAT, Florent**
**38140 IZEAUX (FR)**
• **GUEGAN-MARAT, Sophie**
**38420 REVEL (FR)**
• **ARNAISE, Nicolas**
**38130 ECHIROLLES (FR)**

(74) Mandataire: **IPAZ**
**Bâtiment Platon**
**Parc Les Algorithmes**
**91190 Saint-Aubin (FR)**

(56) Documents cités:
**WO-A1-2010/119231      CN-A- 106 780 552**

• **SUNKARA JAYA KRISHNA ET AL: "Object tracking techniques and performance measures - A conceptual survey", 2017 IEEE INTERNATIONAL CONFERENCE ON POWER, CONTROL, SIGNALS AND INSTRUMENTATION ENGINEERING (ICPCSI), IEEE, 21 September 2017 (2017-09-21), pages 2297 - 2305, XP033362427, ISBN: 978-1-5386-0813-5, [retrieved on 20180620], DOI: 10.1109/ ICPCSI.2017.8392127**
• **LI HUQUAN ET AL: "Robust Human Targets Tracking for MIMO Through-Wall Radar via Multi-Algorithm Fusion", IEEE JOURNAL OF SELECTED TOPICS IN APPLIED EARTH OBSERVATIONS AND REMOTE SENSING, IEEE, USA, vol. 12, no. 4, April 2019 (2019-04-01), pages 1154 - 1164, XP011719133, ISSN: 1939-1404, [retrieved on 20190410], DOI: 10.1109/ JSTARS.2019.2901262**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

**DOMAINE TECHNIQUE DE L'INVENTION**

La présente invention concerne le domaine de la détection et plus particulièrement le suivi de cibles ou d'objets.

**ETAT DE LA TECHNIQUE ANTERIEURE**

Le suivi (ou tracking) multi-cibles est une tâche complexe nécessitant la mise en oeuvre de plusieurs algorithmes engendrant un nombre d'opérations important. Le suivi multi-cible induit l'utilisation simultanée de plusieurs composants matériels : un processeur standard, des puces spécialisées dans le décodage vidéo et des processeurs graphiques.

Les algorithmes utilisés par la chaine de traitement d'un système de suivi multi-cibles comportent un nombre important de paramètres de configuration influençant à la fois la qualité du suivi obtenu et la charge imposée au matériel.

Le système doit caractériser, d'une part, l'ensemble des cibles connues, puis évaluer si une détection est compatible avec une cible. La caractérisation peut porter, par exemple, sur le mouvement ou l'aspect visuelle. Le système doit donc établir une métrique de corrélation entre une détection et une cible et choisir le couple (cible, détection) présentant la métrique la meilleure.

Lorsque la métrique de corrélation est non satisfaisante pour un ensemble de cibles connues le système de suivi doit établir qu'une nouvelle cible a été perçue. Ainsi le système doit se baser sur un seuil pour la métrique de corrélation. Ce seuil dépend des technologies et méthodes employées pour la caractérisation de la cible et de la détection mais, également de la classe des cibles considérées. La classe d'une cible permet de définir la nature de celle-ci. Par exemple, et de manière non limitative, « Humain », « voiture », « chien » sont des classes pouvant être traitées et suivies par le système.

Les situations pour lesquelles un algorithme de suivi ou de détection de cibles d'un système de suivi ne fonctionnent pas peuvent être utilisées par ledit système de suivi pour éviter que ledit algorithme de suivi, lorsqu'il est exécuté sur le processeur d'un dispositif de suivi en fonctionnement dans son environnement cible, ne génère des informations de détection erronées. La détermination des situations pour lesquelles un algorithme de suivi ne fonctionne consiste en général à reproduire en phase d'évaluation les conditions de fonctionnement de l'algorithme de suivi et de comparer les résultats dudit algorithme avec une vérité terrain. Néanmoins, Cette approche pose des difficultés allant de la détermination les situations auxquelles le tracker va être confronté à la réitération de l'évaluation à chaque fois qu'un nouvel environnement cible se présente et/ou que l'environnement cible est susceptible de changer

**EXPOSE DE L'INVENTION**

La présente invention a pour but de pallier certains inconvénients de l'art antérieur en offrant une méthode pour améliorer le suivi ou la détection de cible dans un environnement donné.

A cet effet, la présente invention concerne un procédé de calibrage d'un système de suivi collaboratif mono ou multi-cible(s) comportant au moins un ensemble d'algorithmes de suivi T exécutés par au moins un processeur pour traiter les informations provenant d'un flux d'images pour la détection de cibles dans le flux d'images vidéos capturé au moins par une caméra donnée du système de suivi, selon un point de vue donné d'une scène à surveiller, chaque algorithme de suivi T utilisant au moins une zone de référence $S_{ref}^{T}$ connue représentant l'ensemble des situations pour lesquelles l'algorithme détecte une cible réelle et au moins une zone d'échecs $S_{fail}^{T}$ connue représentant l'ensemble des situations pour lesquels l'algorithme de suivi ne détecte pas de cible réelle, le système de suivi mono ou multi-cible (s) comprenant au moins un ensemble de modules/programmes enregistrés dans une mémoire et au moins un processeur exécutant l'ensemble des modules pour mettre en oeuvre le procédé de calibrage, ledit procédé étant caractérisé en ce qu'il comprend au moins les étapes consistant à:

Collecter (E1) les associations de tous les algorithmes de suivi T du système de suivi mono ou multi-cible(s) pour créer un dictionnaire de prédictions $Dict_{prédictions}$ pour une cible donnée ;

Déterminer (E2), via le dictionnaire de prédictions créé $Dict_{prédictions}$, les algorithmes de suivi T en zone de référence pour créer une liste «vérités terrains » $Liste_{vérités\ terrain}$ comprenant les algorithmes de suivi T ayant un score de confiance supérieur à une valeur seuil prédéfinie ;

Mettre à jour (E3) la zone d'échecs connue de chaque algorithme de suivi T de la liste des algorithmes de suivi T du système de suivi mono ou multi-cible(s) ne faisant pas partie de la liste «vérités terrains » $Liste_{vérités\ terrain}$ et ayant un score de vraisemblance inférieur à un seuil prédéterminé.

Selon une autre particularité, l'étape de collecte (E1) des associations d'algorithmes de suivi consiste à au moins

Pour chaque algorithme de suivi T :

Prédire (E10), à partir du flux d'images vidéos, les états d'une cible ou d'un ensemble de cibles contenu dans les flux d'images pour créer un dictionnaire de prédictions $Dict_{prédictions}{}^{T}$ lié à l'algorithme de suivi T, ledit dictionnaire de prédictions $Dict_{prédictions}{}^{T}$ prenant en entrée un identifiant de cible existante ou nouvelle $ID_{cible}$ et donnant en sortie comme valeur un vecteur caractérisant l'état de la nouvelle cible nommé $Etat_{cible}$;

Pour chaque triplet ($ID_{cible}$, $Etat_{cible}$, date) inclus dans le dictionnaire de prédictions $Dict_{prédictions}{}^{T}$ de l'algorithme de suivi T, créer (E11) le dictionnaire de prédictions $Dict_{prédictions}$ pour une cible donnée en ajoutant sur une liste le triplet ( $ID_{tracker}$, $Etat_{cible}$, date), le dictionnaire de prédiction $Dict_{prédictions}$ pour une cible donnée prenant en entrée l'identifiant de la cible IDcible et donnant comme valeur en sortie une liste de triplet ($ID_{tracker}$, $Etat_{cible}$, date) où $ID_{tracker}$ est l'identifiant de l'algorithme de suivi T et la date est la valeur de la date à laquelle la détection de la cible a été effectuée par l'algorithme de suivi T;

Selon une autre particularité, l'étape de détermination (E2) d'algorithmes de suivi T en zone de référence comprend

Pour chaque cible $ID_{cible}$ et liste de triplet ($ID_{tracker}$, $Etat_{cible}$, date) dans le dictionnaire de prédictions d'une cible $Dict_{prédictions}$

Calculer (E20) un vecteur de métriques $Sit_{cible}$ de la cible, le vecteur de métrique caractérisant la situation de la cible $ID_{cible}$ ;

Vérifier si le vecteur de métrique $Sit_{cible}$ appartient à la zone de référence $S_{ref}{}^{T}$ de l'algorithme de suivi T ;

Si oui, ajouter le quintuplet ($ID_{cible}$, $ID_{meilleurTracker}$, $Etat_{cible}$, $Sit_{cible}$, date) à une liste pour créer (E21) la liste « vérités terrain » $Liste_{vérités\ terrain,}$ $ID_{meilleurTracker}$ désignant l'algorithme de suivi T de la liste de triplet inclus dans le dictionnaire de prédictions $Dict_{prédictions}$ et ayant le score de confiance le plus élevé, dans le calcul de la situation caractérisée par le vecteur de métriques $Sit_{cible}$, en comparaison aux autres scores obtenus par les autres algorithmes dudit dictionnaire de prédictions

Selon une autre particularité, l'étape de mise à jour (E3) comprend :

Pour chaque élément ($ID_{cible}$, $ID_{meilleurTracker}$, $Etat_{cible}{}^{GT}$, $Sit_{cible}$, date) de la liste « vérités terrain » $Liste_{vérités\ terrain}$ au moins une des étapes consistant à :

Rechercher (E30), dans le dictionnaire de prédictions pour une cible donnée $Dict_{prédictions}$, la prédiction pour l'algorithme de suivi T avec l'identifiant $ID_{tracker}$ et la cible $ID_{cible}$ à la date donnée, la prédiction correspondant à l'état cible $Etat_{cible}$ dans la liste ($ID_{tracker}$, $Etat_{cible}$, date) du dictionnaire de prédictions $Dict_{prédictions}$,

Calculer (E31) un score de vraisemblance définie par la mesure de la distance entre l'état cible de la liste « vérités terrain » $Liste_{vérités\ terrain}$, $Etat_{cible}{}^{GT}$, et l'état cible recherché dans la liste ($ID_{tracker}$, $Etat_{cible}$, date) du dictionnaire de prédictions $Dict_{prédictions}$

Si l'identité $ID_{tracker}$ de l'algorithme de suivi T du dictionnaire de prédictions $Dict_{prédictions}$ est différent de l'identité $ID_{meilleurTracker}$ de l'algorithme de suivi T de la liste « vérités terrain » $Liste_{vérités\ terrain}$ et que le score de vraisemblance calculé est inférieur à une valeur seuil prédéterminé, alors ;

Mettre à jour (E32) la zone d'échecs $S_{fail}{}^{T}$ de l'algorithme de suivi T en y rajoutant le vecteur de métriques $Sit_{cible}$ calculé dans l'étape de détermination d'algorithme de suivi T en zone de référence et compris dans l'élément élément ($ID_{cible}$, $ID_{meilleurTracker}$, $Etat_{cible}{}^{GT}$, $Sit_{cible}$, date) de la liste « vérités terrain » $Liste_{vérités\ terrain}$

Selon un autre but l'invention concerne également un dispositif permettant d'améliorer le suivi ou la détection de cible dans un environnement donné.

Ce but est atteint par un dispositif de calibrage (1) d'un système de suivi mono ou multi-cible(s) comprenant au moins une mémoire pour stocker un ensemble de programmes et au moins une unité de calcul pour exécuter les dits programmes pour réaliser les étapes du procédé de calibrage selon l'une quelconque des revendications précédentes et mémoriser les résultats des calculs dans les listes, ($Liste_{vérités\ terrains}$, Liste du dictionnaire de prédictions $Dict_{prédictions}$ contenant chaque triplet ($ID_{tracker}$, $Etat_{cible}$, date) d'une cible $ID_{cible}$), les dictionnaires de prédictions, la zone de référence $S_{ref}{}^{T}$ ou la zone d'échecs $S_{fail}{}^{T}$ connue de l'algorithme de suivi T pour chaque dispositif de suivi (tracker) d'une pluralité de dispositif de suivi du système de suivi, chaque dispositif de suivi comprenant au moins un algorithme de suivi T..

Selon une autre particularité, le procédé de calibrage est utilisé dans un système de suivi collaboratif mono ou multi-cible(s) dans lequel le flux d'images d'un serveur de flux vidéo (SFV) est envoyé, d'une part sur un dispositif de détection d'objet (RFCN) pour délivrer des informations d'identification de nouvelles cibles à chacun des dispositif de suivi mono cible $DT_{MIL}$ et $DT_{KCF}$ exécutant des algorithmes de suivi de type MIL (Multiple Instance Learning) et KCF (kernelized corrélation filter), d'autre part à chacun des dispositif de suivi $DT_{MIL}$ et $DT_{KCF}$ dont les signaux de sortie sont envoyés pour traitement par le dispositif de calibrage (1), mettant en oeuvre le procédé de calibrage, et comprenant un dispositif (DRCTS) exécutant une routine principale de suivi collaboratif et dialoguant d'une part avec un calculateur (CS) de situations pour obtenir le vecteur de métriques $Sit_{cible}$ calculé pour chaque nouvelle cible et avec un gestionnaire (GZE) des zones d'échecs $S_{fail}{}^{T}$ connues pour fournir cette information à un dispositif de suivi principal (DTP) élaborant le résultat du suivi à partir de l'information transmise par GZE et des informations transmises par le dispositif de suivi $DT_{MIL}$ ou $DT_{KCF}$.:

Selon une autre particularité, le procédé de calibrage est utilisé dans un système de suivi collaboratif mono ou multi-cible(s) dans lequel le flux d'images d'un serveur de flux vidéo est envoyé, d'une part sur un dispositif de suivi multi-cible $DT_{MHT}$ exécutant un algorithme de suivi de type MHT (Multiple Hypothesis Tracking) et un dispositif de détection d'objet (RFCN) pour délivrer des informations d'identification de nouvelles cibles au dit dispositif de suivi multi-cible $DT_{MHT}$, d'autre part à chacun de deux ensembles de pluralité de dispositifs de suivi $DT_{MIL}$ et $DT_{KCF}$ exécutant des algorithmes de suivi de type MIL ( Multiple Instance Learning) et KCF (kernelized corrélation filter), le dispositif de suivi multi-cible DMHT transmettant des informations d'initialisation de cibles comprenant au moins les coordonnées desdites cibles à chacun des deux ensembles de pluralité de dispositifs de suivi $DT_{MIL}$ et $DT_{KCF}$, les signaux de sortie de chacun des dispositifs de suivi $DT_{MHT}$, $DT_{MIL}$, $DT_{KCF}$ sont envoyés pour traitement par le dispositif de calibrage (1), selon la revendication 5, mettant en oeuvre le procédé de calibrage, selon les revendications 1 à 4, et comprenant un dispositif (DRCTS) exécutant la routine principale de suivi collaboratif (RCTS) et dialoguant d'une part avec un calculateur (CS) de situations (Sit) pour obtenir le vecteur de métriques $Sit_{cible}$ calculé pour chaque nouvelle cible et avec un gestionnaire (GZE) des zones d'échecs $S_{fail}{}^{T}$ connues pour fournir cette information à un dispositif de suivi principal (DTP) élaborant le résultat du suivi à partir de l'information transmise par GZE et des informations transmises par chaque dispositif de suivi $DT_{MHT}$, $DT_{MIL}$ ou $DT_{KCF}$.

D'autres particularités et avantages de la présente invention sont détaillés dans la description qui suit.

## BREVE DESCRIPTION DES FIGURES

D'autres particularités et avantages de la présente invention apparaîtront plus clairement à la lecture de la description ci-après, faite en référence aux dessins annexés, dans lesquels :

[Fig 1A]

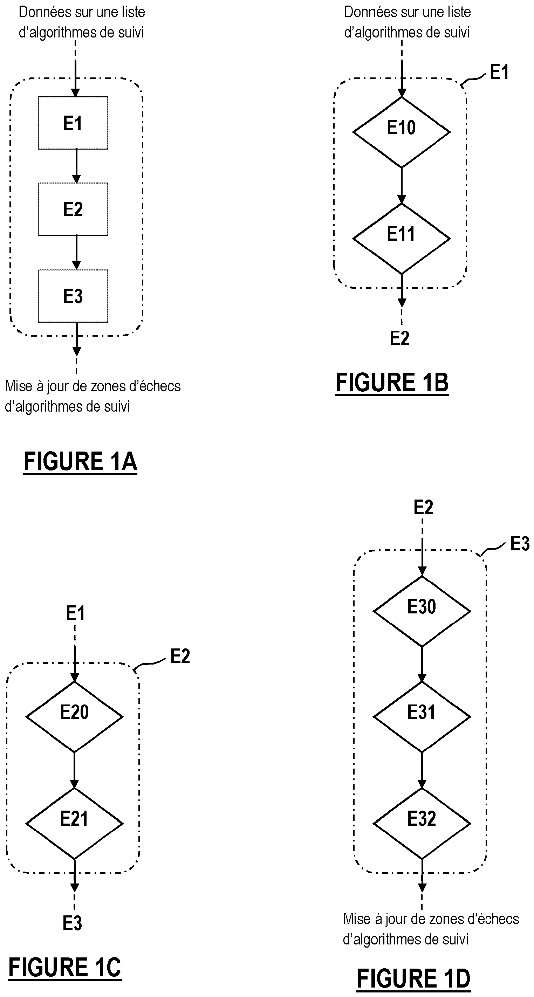

- La figure 1A représente schématiquement les étapes du procédé de calibrage des zones d'échecs associés aux algorithmes de suivi T d'un système de suivi mono ou multi-cibles, selon un mode de réalisation ;
[Fig 1B]
- La figure 1B représente schématiquement l'étape de collecte (E1) des associations de tous les algorithmes de suivi T du système de suivi mono ou multi-cible(s), selon un mode de réalisation ;
[Fig 1C]
- La figure 1C représente schématiquement l'étape de détermination (E2) des algorithmes de suivi T, du système de suivi mono ou multi-cible(s), qui sont en zone de référence, selon un mode de réalisation;
[Fig 1D]
- La figure 1D représente schématiquement l'étape de mise à jour (E3) de la zone d'échecs de chaque algorithme de suivi T du système de suivi mono ou multi-cible(s), selon un mode de réalisation;
[Fig 2]

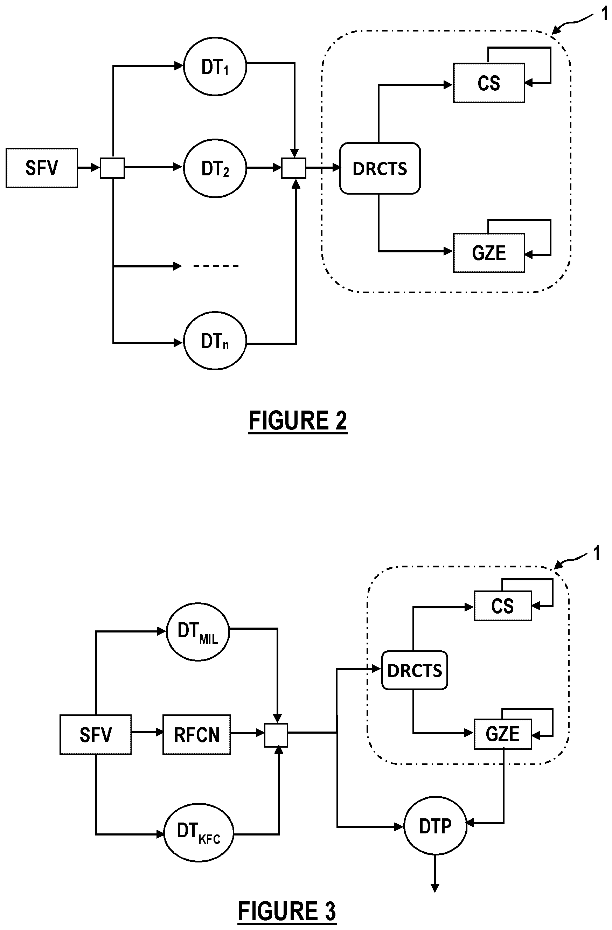

- La figure 2 représente schématiquement l'intégration du dispositif de calibrage (1) dans la chaîne de traitement d'un système de suivi ou de détection mono ou multi-cibles, selon un mode de réalisation;
[Fig 3]
- La figure 3 représente schématiquement l'utilisation du dispositif de calibrage (1) dans la chaîne de traitement d'un système de suivi ou de détection mono-cible, selon un mode de réalisation;
[Fig 4]

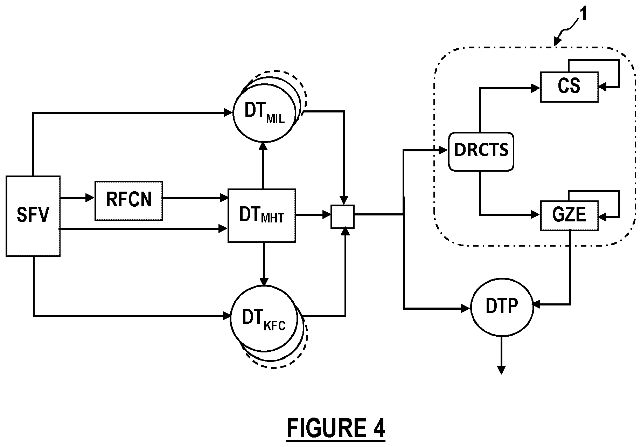

- La figure 4 représente schématiquement l'utilisation du dispositif de calibrage (1) dans la chaîne de traitement d'un système de suivi ou de détection multi-cible, selon un mode de réalisation;

## DESCRIPTION DES MODES DE REALISATION

La présente invention concerne un procédé de calibrage d'un système de suivi collaboratif mono ou multi-cible(s).

Dans certains modes de réalisation, le procédé de calibrage est implémenté dans un système de suivi collaboratif mono ou multi-cible(s) comportant au moins un ensemble d'algorithmes de suivi T exécutés par au moins un processeur pour traiter les informations provenant d'un flux d'images pour la détection de cibles dans le flux d'images vidéo capturées au moins par une caméra donnée du système de suivi, selon un point de vue donné d'une scène à surveiller. Chaque algorithme de suivi T utilise au moins une zone de référence $S_{ref}^T$ connue qui représente l'ensemble des situations pour lesquelles l'algorithme détecte une cible réelle et au moins une zone d'échecs $S_{fail}^T$ connue représentant l'ensemble des situations pour lesquels l'algorithme de suivi ne détecte pas de cible réelle,.

La situation ou situation d'une cible nommée «cx» est caractérisé par un vecteur de métriques appelé $Sit_{cx}$. Le vecteur de métriques $Sit_{cx}$ peut comprendre, par exemple et de manière non limitative, les composantes suivantes :

- Coordonnées dans le plan caméra
- Taille de la cible «cx»
- Vitesse de la cible « cx »
- Nombre de cibles voisines
- Différence entre la couleur dominante de la cible et la couleur dominante de l'arrière-plan.

Le vecteur de métriques fourni ainsi les informations pouvant servir à identifier une cible.

Le système de suivi comprend au moins une mémoire dans laquelle, chaque algorithme de suivi T enregistre, dans un espace dédié, ses situations de réussite (détection de cibles) récupérées lors de tests sur des données d'entraînement issues de flux d'images vidéo stockés dans une base de données dudit système. Ces situations de réussite constituent une zone de référence. « Détecter une cible réelle », correspond donc à donner une prédiction dans une des situations de la zone de référence.

La zone de référence $S_{ref}^T$ d'un algorithme de suivi T est formée par des vecteurs métriques pour lesquels l'algorithme de suivi donne par exemple, et de manière non limitative, un score de confiance supérieur à un seuil prédéterminé.

Dans une variante, la zone de référence $S_{ref}^T$ d'un algorithme de suivi T peut être obtenue par constatation statistique sur un grand nombre de données.

Dans une autre variante, la zone de référence $S_{ref}^T$ d'un algorithme de suivi T peut être obtenue par évaluation (inférence) d'un ensemble de conditions (règles), prédéfinies et mémorisées dans le système de suivi collaboratif, caractérisant une situation.

Par calibrage du système de suivi, nous entendons la détermination de zones d'échecs ou d'un ensemble de situations pour lesquelles les algorithmes de suivi T du système de suivi ne détectent pas de cibles ou fonctionne pas. Le système de suivi mono ou multi-cible (s) comprend au moins un ensemble de modules/programmes enregistrés dans une mémoire et au moins un processeur exécutant l'ensemble des modules pour mettre en oeuvre le procédé de calibrage.

Dans certains modes de réalisation, le procédé de calibrage comprend au moins une étape consistant à collecter (E1) les associations de tous les algorithmes de suivi T du système de suivi mono ou multi-cible(s) pour créer un dictionnaire de prédictions $Dict_{prédictions}$ pour une cible donnée;

Dans une variante, le procédé de calibrage comprend au moins une étape consistant à déterminer (E2), via le dictionnaire de prédictions créé $Dict_{prédictions}$, les algorithmes de suivi T en zone de référence pour créer une liste «vérités terrains» $Liste_{vérités}$ *terrain* comprenant les algorithmes de suivi T ayant un score de confiance supérieur à une valeur seuil prédéfinie ;

Dans une autre variante, le procédé de calibrage comprend au moins une étape consistant à mettre à jour (E3) la zone d'échecs connue de chaque algorithme de suivi T de la liste des algorithmes de suivi T du système de suivi mono ou multi-cible(s) ne faisant pas partie de la liste «vérités terrains» $Liste_{vérités}$ *terrain* et ayant un score de vraisemblance inférieur à un seuil prédéterminé.

Dans certains modes de réalisations, après réception des flux d'images vidéo capturés par au moins une caméra du système de suivi collaboratif mono ou multi-cibles comme, l'étape de collecte (E1) des associations d'algorithmes de suivi, comme illustré par les Figures 1A et 1B, consiste à au moins :

Pour chaque algorithme de suivi T :

Prédire (E10), à partir du flux d'images vidéo, les états d'une cible ou d'un ensemble de cibles contenu dans les flux d'images pour créer un dictionnaire de prédictions $Dict_{prédictions}^T$ lié à l'algorithme de suivi T. Ledit dictionnaire de prédictions $Dict_{prédictions}^T$ prend en entrée un identifiant de cible $ID_{cible}$, attribué à une cible existante ou nouvelle, et donne en sortie comme valeur un vecteur caractérisant l'état de la nouvelle cible nommé $Etat_{cible}$ ;

Le dictionnaire de prédictions $Dict_{prédictions}^T$ est constitué des prédictions calculées par l'algorithme de suivi T, exécuté sur un processeur du système de suivi collaboratif ou sur le processeur un dispositif de suivi dudit système de suivi collaboratif et dans lequel l'algorithme de suivi est mémorisé, concernant un instant « t+1 » à partir de données (flux d'images vidéo enregistrées dans une base de données du système de suivi collaboratif) connues à l'instant « t ». L'algorithme de suivi T propose des prédictions en associant une détection à une cible avec un score de confiance. L'état de la nouvelle cible $Etat_{cible}$ peut comprendre par exemple la position de la cible dans l'image, le score de confiance de calculé par l'algorithme de suivi, etc.

Pour chaque triplet ($ID_{cible}$, $Etat_{cible}$, date) inclus dans le dictionnaire de prédictions $Dict_{prédictions}^{T}$ de l'algorithme de suivi T, créer (E11) le dictionnaire de prédictions $Dict_{prédictions}$ pour une cible donnée en ajoutant sur une liste le triplet ($ID_{tracker}$, $Etat_{cible}$, date). Le dictionnaire de prédiction $Dict_{prédictions}$ pour une cible donnée prend en entrée l'identifiant de la cible $ID_{cible}$ et donne comme valeur en sortie une liste de triplet ($ID_{tracker}$, $Etat_{cible}$, date) où $ID_{tracker}$ est l'identifiant attribué à l'algorithme de suivi T et « date » est la valeur de la date à laquelle la détection de la cible a été effectuée par l'algorithme de suivi T. Pour chaque cible, $Dict_{prédictions}$ est l'union ou l'ensemble des $Dict_{prédictions}^{T}$ de chacun des algorithmes de suivi T pour cette cible.

Dans certains modes de réalisations, une fois que les dictionnaires $Dict_{prédictions}$ des cibles ont été créés, l'étape de détermination (E2) d'algorithmes de suivi T en zone de référence de chaque cible, telle qu'illustrée par les Figures 1A et 1C, est implémenté. Cette étape de détermination (E2) comprend au moins les sous-étapes suivantes:
Pour chaque cible $ID_{cible}$ et liste de triplet ($ID_{tracker}$, $Etat_{cible}$, date) dans le dictionnaire de prédictions d'une cible $Dict_{prédictions}$ créé dans l'étape de collecte (E1) des associations d'algorithmes de suivi :

Calculer (E20), via des algorithmes de métriques distincts des algorithmes de suivi T et stockés dans une mémoire du système de suivi collaboratif, un vecteur de métriques $Sit_{cible}$ de la cible, le vecteur de métrique caractérisant la situation de la cible $ID_{cible}$ ;
Vérifier si le vecteur de métrique $Sit_{cible}$ appartient à la zone de référence $S_{ref}^{T}$ de l'algorithme de suivi T;
Si oui, ajouter le quintuplet ($ID_{cible}$, $ID_{meilleurTracker}$, $Etat_{cible}$, $Sit_{cible}$, date) à une liste pour créer (E21) la liste « vérités terrain » $Liste_{vérités\ terrain}$, $ID_{meilleurTracker}$ désignant l'algorithme de suivi T de la liste de triplet inclus dans le dictionnaire de prédictions $Dict_{prédictions}$ et ayant le score de confiance le plus élevé, dans le calcul de la situation caractérisée par le vecteur de métriques $Sit_{cible}$, en comparaison aux autres scores obtenus par les autres algorithmes de suivi dudit dictionnaire de prédictions.

La boucle « pour chaque cible $ID_{cible}$ ....», ci-dessus, signifie « pour chaque cible, établir comme « vérité terrain », pour un algorithme de suivi T, l'état $Etat_{cible}$ le plus confiant si T est dans sa zone de référence $S_{ref}^{T}$. La « vérité terrain » est donc, en d'autres termes, la valeur prise par l'état $Etat_{cible}$ prédit par l'algorithme de suivi T, inclus dans le dictionnaire de prédictions $Dict_{prédictions}$ et, ayant le score de confiance le plus élevé, dans le calcul de la situation caractérisée par le vecteur de métriques $Sit_{cible}$, en comparaison aux autres scores obtenus par les autres algorithmes de suivi dudit dictionnaire de prédictions.

Dans certains modes de réalisations, illustré par les Figures 1A et 1D et après implémentation de l'étape de détermination (E2) d'algorithmes de suivi T en zone de référence de chaque cible aboutissant à la création de la liste « vérités terrain » $Liste_{vérités\ terrain}$, l'étape de mise à jour (E3) de zones d'échecs est exécutée. Ladite étape de mise à jour (E3) comprend

Pour chaque élément ($ID_{cible}$, $ID_{meilleurTracker}$, $Etat_{cible}^{GT}$, $Sit_{cible}$, date) de la liste « vérités terrain » $Liste_{vérités\ terrain}$ au moins une des étapes consistant à :

Rechercher (E30), dans le dictionnaire de prédictions pour une cible donnée $Dict_{prédictions}$, la prédiction pour l'algorithme de suivi T avec l'identifiant $ID_{tracker}$ et la cible $ID_{cible}$ à la date donnée. La prédiction correspond à l'état cible $Etat_{cible}$ dans la liste ($ID_{tracker}$, $Etat_{cible}$, date) du dictionnaire de prédictions $Dict_{prédictions}$ pour une cible donnée,

Calculer (E31) un score de vraisemblance définie par la mesure de la distance entre l'état cible de la liste « vérités terrain » $Liste_{vérités\ terrain}$, $Etat_{cible}^{GT}$, et l'état cible recherché dans la liste ($ID_{tracker}$, $Etat_{cible}$, date) du dictionnaire de prédictions $Dict_{prédictions}$ pour une cible donnée,

Si l'identité $ID_{tracker}$ de l'algorithme de suivi T du dictionnaire de prédictions $Dict_{prédictions}$, pour une cible donnée, est différent de l'identité $ID_{meilleurTracker}$ de l'algorithme de suivi T de la liste « vérités terrain » $Liste_{vérités\ terrain}$ (c'est-à-dire que l'algorithme de suivi n'est pas (et ne doit pas être) le « meilleur algorithme de suivi » ayant donné l'état $Etat_{cible}^{GT}$) et que le score de vraisemblance calculé est inférieur à une valeur seuil prédéterminé, alors ;

Mettre à jour (E32) la zone d'échecs $S_{fail}^{T}$ de l'algorithme de suivi T en y rajoutant le vecteur de métriques $Sit_{cible}$ calculé dans l'étape de détermination d'algorithme de suivi T en zone de référence et compris dans l'élément élément ($ID_{cible}$, $ID_{meilleurTracker}$, $Etat_{cible}^{GT}$, $Sit_{cible}$, date) de la liste « vérités terrain » $Liste_{vérités\ terrain}$

$Etat_{cible}^{GT}$ correspond à l'$Etat_{cible}$ du meilleur algorithme de suivi T défini comme « vérité terrain ». GT (Ground Truth) correspond à la signification en anglais du terme « vérité terrain ».

Par exemple, et de manière non limitative, la distance entre les deux états $Etat_{cible}^{GT}$ et $Etat_{cible}$, peut être calculée via l'exécution d'un algorithme dédié qui compare les positions physique (dans l'espace) des deux états.

Dans certains modes de réalisation l'algorithme dédiée peut être par exemple, et de manière non limitative, l'algorithme du coefficient de Jaccard (ou méthode IoU pour Intersection over Union en anglais) qui est une méthode statistique dont l'exécution évalue la similarité entre les deux états $Etat_{cible}^{GT}$ et $Etat_{cible}$. La similarité est définie par le coefficient de Jaccard.

Ainsi, la zone d'échecs de chaque algorithme de suivi T du système de suivi mono ou multi-cibles est actualisée automatiquement en fonction des zones de références des autres algorithmes de suivi, c'est-à-dire de manière collaborative. La mise à jour de la zone d'échecs d'un algorithme de suivi, implémenté par un dispositif de suivi (tracker) du système de suivi collaboratif, c'est-à-dire les situations pour lesquelles il ne faut pas faire confiance à l'algorithme de suivi pour la détection d'une cible, permet d'éviter la génération d'informations erronées lors du fonctionnement dudit dispositif de suivi.

L'invention concerne également un dispositif de calibrage d'un système de suivi mono ou multi-cible(s).

Dans certains modes de réalisation, comme illustré sur la Figure 2, le dispositif de calibrage (1) peut être intégré dans la chaîne de traitement d'un système de suivi ou de détection mono ou multi-cibles. Ledit dispositif de calibrage comprend au moins une mémoire pour stocker un ensemble de programmes et au moins une unité de calcul pour exécuter les dits programmes pour réaliser les étapes du procédé de calibrage, tel que décrit dans la présente demande, et mémoriser les résultats des calculs dans les listes, ($Liste_{vérités terrains}$, Liste du dictionnaire de prédictions $Dict_{prédictions}$ contenant chaque triplet ($ID_{tracker}$, $Etat_{cible}$, date) d'une cible $ID_{cible}$), les dictionnaires de prédictions, la zone de référence $S_{ref}^{T}$ ou la zone d'échecs $S_{fail}^{T}$ connue de l'algorithme de suivi T pour chaque dispositif de suivi (ou tracker) d'une pluralité de dispositifs de suivi, chaque dispositif de suivi comprenant au moins un algorithme de suivi T.

La figure 3, illustre l'utilisation du dispositif de calibrage dans un mode de réalisation. Le dispositif de calibrage (1) peut être intégré dans un dans un système de suivi collaboratif comportant au moins un ensemble de caméras pour capturer des images vidéo, un serveur de flux vidéo (SFV) pour au moins stocker les flux d'images vidéo capturés par les caméras et des dispositifs de suivi DT implémentant des algorithmes de suivi qui peuvent être identiques ou différents. Le flux d'images du serveur de flux vidéo (SFV) est envoyé ou transmis, d'une part sur un dispositif de détection d'objet (RFCN), inclus dans le système de suivi, pour délivrer des informations d'identification de nouvelles cibles à chacun des dispositifs de suivi mono cible $DT_{MIL}$ et $DT_{KCF}$ exécutant des algorithmes de suivi de type MIL (Multiple Instance Learning) et KCF (kernelized corrélation filter), d'autre part à chacun des dispositif de suivi $DT_{MIL}$ et $DT_{KCF}$ dont les signaux de sortie sont envoyés pour traitement par le dispositif de calibrage (1) tel que défini dans la présente demande. Le dispositif de calibrage met en oeuvre le procédé de calibrage, tel que défini dans la présente demande, et comprend au moins un dispositif (DRCTS) exécutant une routine principale de suivi collaboratif et dialoguant d'une part avec un calculateur (CS) de situations pour obtenir le vecteur de métriques $Sit_{cible}$ calculé pour chaque nouvelle cible et avec un gestionnaire (GZE) des zones d'échecs $S_{fail}^{T}$ connues pour fournir cette information à un dispositif de suivi principal (DTP) élaborant le résultat du suivi à partir de l'information transmise par le gestionnaire GZE et des informations transmises par le dispositif de suivi $DT_{MIL}$ ou $DT_{KCF}$.

Dans un autre mode de réalisation illustré par la Figure 4, Le dispositif de calibrage (1) peut être intégré dans un dans un système de suivi collaboratif comportant au moins un ensemble de caméras pour capturer des images vidéo, un serveur de flux vidéo (SFV) pour au moins stocker les flux d'images vidéo capturés par les caméras et des dispositifs de suivi DT implémentant des algorithmes de suivi qui peuvent être identiques ou différents. Le flux d'images du serveur de flux vidéo est envoyé ou transmis, d'une part sur un dispositif de suivi multi-cible $DT_{MHT}$ exécutant un algorithme de suivi de type MHT (Multiple Hypothesis Tracking) et un dispositif de détection d'objet (RFCN) pour délivrer des informations d'identification ou de détection de nouvelles cibles au dit dispositif de suivi multi-cible $DT_{MHT}$, d'autre part à chacun de deux ensembles de pluralité de dispositifs de suivi $DT_{MIL}$ et $DT_{KCF}$ exécutant des algorithmes de suivi de type MIL ( Multiple Instance Learning) et KCF (kernelized corrélation filter), le dispositif de suivi multi-cible $D_{MHT}$ transmettant des informations d'initialisation de cibles à chacun des deux ensembles de pluralité de dispositifs de suivi $DT_{MIL}$ et $DT_{KCF}$. Les informations transmises par le dispositif de suivi multi-cible $D_{MHT}$ comprennent au moins les coordonnées des cible(s). Ces coordonnées peuvent être utilisées par les dispositifs de suivi $DT_{MIL}$ et $DT_{KCF}$ pour extraire, via des algorithmes stockés dans leur mémoire, au moins une vignette de l'image autour de chaque cible qui servira à leur initialisation. Les signaux de sortie de chacun des dispositifs de suivi $DT_{MHT}$, $DT_{MIL}$, $DT_{KC}F$ sont envoyés pour traitement par le dispositif de calibrage (1), tel que défini dans la présente demande. Ledit dispositif de calibrage (1) met en oeuvre le procédé de calibrage, tel que décrit dans la présente demande, et comprend au moins un dispositif (DRCTS) exécutant la routine principale de suivi collaboratif (RCTS) et dialoguant d'une part avec un calculateur (CS) de situations pour obtenir le vecteur de métriques $Sit_{cible}$ calculé pour chaque nouvelle cible et avec un gestionnaire (GZE) des zones d'échecs $S_{fail}^{T}$ connues pour fournir cette information à un dispositif de suivi principal (DTP) élaborant le résultat du suivi à partir de l'information transmise par le gestionnaire GZE et des informations transmises par chaque dispositif de suivi DT$_{MHT}$, DT$_{MIL}$ ou DT$_{KCF}$.

Le procédé de suivi tel que décrit dans la présente demande permet de réduire les faux positifs d'un système de suivi global et donc d'améliorer le suivi global.

Par système de suivi global nous entendons un système de suivi utilisant plusieurs algorithmes de suivi T, différents ou identiques, pour réaliser le suivi de cible sur un même flux vidéo.

En définissant une « tracklet » comme une liste de positions placées dans le temps (x,y,t) devant se référer à une cible par exemple, et de manière non limitative, une personne ou un même objet physique, on entend par faux positif dans un processus de suivi:

- la « tracklet » ayant au sein de sa liste de positions des positions ne se référant à aucun humain ou objet de la vérité terrain
- La « tracklet » ayant des positions appartenant à des objets ou des humains différents.

Pour une situation de « Faux négatif » (la situation de « Faux négatif » correspond à celle où une cible est présente mais pas détectée par un algorithme de suivi T). Dans une telle situation, la cible peut être détectée par un autre algorithme de suivi T' du système de suivi collaboratif. Cette situation n'est pas incluse dans la zone d'échecs S$_{fail}$$^T$.

Pour une situation de « Faux positif », l'algorithme de suivi T retourne une réponse qui ne correspond pas à une cible donnée. Deux cas sont possibles :

- Soit la situation se trouve dans la dans la zone d'échecs S$_{fail}$$^T$ et dans ce cas, la réponse n'est pas prise en compte.
- Soit la situation ne se trouve pas dans la zone d'échecs S$_{fail}$$^T$ de l'algorithme de suivi T et dans ce cas la zone d'échecs S$_{fail}$$^T$ de l'algorithme de suivi T est mise à jour.

Dans un autre mode de réalisation, le procédé de la présente demande peut permettre des économies de calculs en rendant possible une stratégie comportant l'extinction périodique d'une partie des dispositifs de suivi d'un système de suivi collaboratif mono ou multi-cibles. Par exemple, et de manière non limitative, soit un système de suivi collaboratif comprenant au moins deux dispositifs de suivi DT$_A$ et DT$_B$, chacun mettant en oeuvre respectivement les algorithmes de suivi T$_A$ et T$_B$ et, au moins le dispositif de calibrage (1) tel que défini dans la présente demande. Si l'on définit par :

- $S_{fail}{}_{t_i}^{T}$ , la zone d'échecs comportant les situations d'échecs connues pour un algorithme de suivi T implémenté par un dispositif de suivi DT à un instant t$_i$ et ;

- $S_{FP}{}_{t_i}^{T}$ , une zone comportant les situations à un instant ti, $S_{fail}{}_{t_i}^{T}$ , exclue, pour lesquelles l'algorithme de suivi T implémenté par un dispositif de suivi DT donne de mauvaises positions pour une cible ;

ledit dispositif de calibrage (1) implémentant le procédé de calibrage, tel que défini dans la présente demande, permet de mettre à jour la zone d'échecs de l'algorithme de suivi T$_A$ à un instant t$_2$ en calculant la composante ( $S_{REF}{}_{t_1}^{T_B} \cap S_{FP}{}_{t_1}^{T_A}$ ) correspondant aux situations, à l'instant t$_1$, où l'algorithme de suivi T$_B$ est en zone de référence ( $S_{REF}{}_{t_1}^{T_B}$ ) et où l'algorithme de suivi T$_A$ est défaillant et n'est pas en zone d'échecs connue, et en l'ajoutant à la zone d'échecs connue $S_{fail}{}_{t_1}^{T_A}$ à l'instant t$_1$ :

$$S_{fail}{}_{t_2}^{T_A} = S_{fail}{}_{t_1}^{T_A} + (S_{REF}{}_{t_1}^{T_B} \cap S_{FP}{}_{t_1}^{T_A})$$

Ainsi le système permet d'étendre la zone connue de défaillance de l'algorithme de suivi T$_A$ entre les instants t$_1$ et t$_2$. Le système de suivi global, comprenant les dispositifs de suivi DT$_A$ et DT$_B$, peut alors tirer avantage de l'intégration du dispositif de calibrage (1) implémentant le procédé de calibrage lorsqu'il est amené à fonctionner dans deux modes successifs dans lesquels respectivement :

- mode 1 : les algorithmes de suivi A et B fonctionnent. On a lors une mise à jour de $S_{fail}{}_{t_1}^{T_A}$ qui devient $S_{fail}{}_{t_2}^{T_A}$ ;

- mode 2: seul l'algorithme de suivi A est utilisé. On utilise dans ce cas du $S_{fail}{}^{T_A}_{t_2}$

Le système de suivi donne alors moins de faux positif pour toutes les situations incluses dans la zone définie par $S_{fail}{}^{T_A}_{t_2} - S_{fail}{}^{T_A}_{t_1}$.

Le deuxième mode (mode 2) défini ci-dessus peut se réaliser si :

- l'algorithme de suivi $T_B$ n'est pas utilisé par absence ou économie temporaire de ressources de calculs
- l'algorithme de suivi $T_B$ n'est pas utilisé dans une phase 2 après calibrage (c'est-à-dire configuration) de $T_A$ dans une phase 1. La phase 1 pouvant être effectué dans un environnement différent (laboratoire, banc d'essai) de l'environnement cible ou directement dans l'environnement cible.

L'exemple ci-dessus, fourni pour deux dispositifs $DT_A$ et $DT_B$ de suivi implémentant chacun respectivement les algorithmes de suivi $T_A$ et $T_B$, peut être généralisé directement pour un système de suivi global comprenant N dispositifs de suivi $DT_{Ai}$ (i= 1, N), la mise à jour des zones d'échecs des algorithmes de suivi étant définies par :

$$S_{fail}{}^{T_{A_1}}_{t_2} = S_{fail}{}^{T_{A_1}}_{t_1} + \left(S_{REF}{}^{T_{A_2}}_{t_1} \cap S_{FP}{}^{T_{A_1}}_{t_1}\right) + \ldots + \left(S_{REF}{}^{T_{A_N}}_{t_1} \cap S_{FP}{}^{T_{A_1}}_{t_1}\right)$$

$$\ldots \qquad \ldots \qquad\qquad\qquad\qquad .$$

$$\ldots \qquad \ldots \qquad\qquad\qquad\qquad .$$

$$S_{fail}{}^{T_{A_N}}_{t_2} = S_{fail}{}^{T_{A_N}}_{t_1} + \left(S_{REF}{}^{T_{A_1}}_{t_1} \cap S_{FP}{}^{T_{A_N}}_{t_1}\right) + \ldots + \left(S_{REF}{}^{T_{A_{N-1}}}_{t_1} \cap S_{FP}{}^{T_{A_N}}_{t_1}\right)$$

La présente demande décrit diverses caractéristiques techniques et avantages en référence aux figures et/ou à divers modes de réalisation. L'homme de métier comprendra que les caractéristiques techniques d'un mode de réalisation donné peuvent en fait être combinées avec des caractéristiques d'un autre mode de réalisation à moins que l'inverse ne soit explicitement mentionné ou qu'il ne soit évident que ces caractéristiques sont incompatibles ou que la combinaison ne fournisse pas une solution à au moins un des problèmes techniques mentionnés dans la présente demande. De plus, les caractéristiques techniques décrites dans un mode de réalisation donné peuvent être isolées des autres caractéristiques de ce mode à moins que l'inverse ne soit explicitement mentionné.

Il doit être évident pour les personnes versées dans l'art que la présente invention permet des modes de réalisation sous de nombreuses autres formes spécifiques sans l'éloigner du domaine d'application de l'invention comme revendiqué. Par conséquent, les présents modes de réalisation doivent être considérés à titre d'illustration, mais peuvent être modifiés dans le domaine défini par la protection demandée, et l'invention ne doit pas être limitée aux détails donnés ci-dessus.

**Revendications**

**1.** Procédé de calibrage d'un système de suivi collaboratif mono ou multi-cible(s) comportant au moins un ensemble d'algorithmes de suivi T exécutés par au moins un processeur pour traiter les informations provenant d'un flux d'images pour la détection de cibles dans le flux d'images vidéos capturé au moins par une caméra donnée du système de suivi, selon un point de vue donné d'une scène à surveiller, chaque algorithme de suivi T utilisant au moins une zone de référence $S_{ref}{}^T$ connue représentant l'ensemble des situations pour lesquelles l'algorithme détecte une cible réelle et au moins une zone d'échecs $S_{fail}{}^T$ connue représentant l'ensemble des situations pour lesquels l'algorithme de suivi ne détecte pas de cible réelle, le système de suivi mono ou multi-cible (s) comprenant au moins un ensemble de modules/programmes enregistrés dans une mémoire et au moins un processeur exécutant l'ensemble des modules pour mettre en oeuvre le procédé de calibrage, ledit procédé étant **caractérisé en ce qu'**il comprend au moins les étapes consistant à:

- Collecter (E1) les associations de tous les algorithmes de suivi T du système de suivi mono ou multi-cible(s) pour créer un dictionnaire de prédictions $Dict_{prédictions}$ pour une cible donnée ;
- Déterminer (E2), via le dictionnaire de prédictions créé $Dict_{prédictions}$, les algorithmes de suivi T en zone de référence pour créer une liste «vérités terrains» $Liste_{vérités\ terrain}$ comprenant les algorithmes de suivi T ayant un score de confiance supérieur à une valeur seuil prédéfinie ;
- Mettre à jour (E3) la zone d'échecs connue de chaque algorithme de suivi T de la liste des algorithmes de suivi T du système de suivi mono ou multi-cible(s) ne faisant pas partie de la liste «vérités terrains» $Liste_{vérités}\ terrain$ et ayant un score de vraisemblance inférieur à un seuil prédéterminé.

2. Procédé de calibrage d'un système de suivi collaboratif mono ou multi-cible(s) selon la revendication 1, **caractérisé en ce que** l'étape de collecte des associations d'algorithmes de suivi consiste à au moins :
   Pour chaque algorithme de suivi T :

   - Prédire (E10), à partir du flux d'images vidéos, les états d'une cible ou d'un ensemble de cibles contenu dans les flux d'images pour créer un dictionnaire de prédictions $Dict_{prédictions}{}^T$ lié à l'algorithme de suivi T, ledit dictionnaire de prédictions $Dict_{prédictions}{}^T$ prenant en entrée un identifiant de cible existante ou nouvelle $ID_{cible}$ et donnant en sortie comme valeur un vecteur caractérisant l'état de la nouvelle cible nommé $Etat_{cibile}$ ;
   - Pour chaque triplet ($ID_{cible}$, $Etat_{cible}$, date) inclus dans le dictionnaire de prédictions $Dict_{prédictions}{}^T$ de l'algorithme de suivi T, créer (E11) le dictionnaire de prédictions $Dict_{prédictions}$ pour une cible donnée en ajoutant sur une liste le triplet ($ID_{tracker}$, $Etat_{cible}$, date), le dictionnaire de prédiction $Dict_{prédictions}$ pour une cible donnée prenant en entrée l'identifiant de la cible $ID_{cible}$ et donnant comme valeur en sortie une liste de triplet ($ID_{tracker}$, $Etat_{cible}$, date) où $ID_{tracker}$ est l'identifiant de l'algorithme de suivi T et la date est la valeur de la date à laquelle la détection de la cible a été effectuée par l'algorithme de suivi T;

3. Procédé de calibrage d'un système de suivi mono ou multi-cible(s) selon les revendications 1 et 2, **caractérisé en ce que** l'étape de détermination (E2) d'algorithmes de suivi T en zone de référence comprend :
   Pour chaque cible $ID_{cible}$ et liste de triplet ($ID_{tracker}$, $Etat_{cible}$, date) dans le dictionnaire de prédictions d'une cible $Dict_{prédictions}$ :

   - Calculer (E20) un vecteur de métriques $Sit_{cible}$ de la cible, le vecteur de métrique caractérisant la situation de la cible $ID_{cible}$ ;
   - Vérifier si le vecteur de métrique $Sit_{cible}$ appartient à la zone de référence $S_{ref}{}^T$ de l'algorithme de suivi T ;
   - Si oui, ajouter le quintuplet ($ID_{cible}$, $ID_{meilleurTracker}$, $Etat_{cible}$, $Sit_{cible}$, date) à une liste pour créer (E21) la liste « vérités terrain » $Liste_{vérités\ terrain}$, $ID_{meilleurTracker}$ désignant l'algorithme de suivi T de la liste de triplet inclus dans le dictionnaire de prédictions $Dict_{prédictions}$ et ayant le score de confiance le plus élevé, dans le calcul de la situation **caractérisée par** le vecteur de métriques $Sit_{cible}$, en comparaison aux autres scores obtenus par les autres algorithmes dudit dictionnaire de prédictions

4. Procédé de calibrage d'un système de suivi mono ou multi-cible(s) selon les revendications 1 et 2, **caractérisé en ce que** l'étape de mise à jour (E3) comprend :
   Pour chaque élément ($ID_{cible}$, $ID_{meilleurTracker}$, $Etat_{cible}{}^{GT}$, $Sit_{cible}$, date) de la liste « vérités terrain » $Liste_{vérités\ terrain}$ au moins une des étapes consistant à :

   - Rechercher (E30), dans le dictionnaire de prédictions pour une cible donnée $Dict_{prédictions}$, la prédiction pour l'algorithme de suivi T avec l'identifiant $ID_{tracker}$ et la cible $ID_{cible}$ à la date donnée, la prédiction correspondant à l'état cible $Etat_{cible}$ dans la liste ($ID_{tracker}$, $Etat_{cible}$, date) du dictionnaire de prédictions $Dict_{prédictions}$,
   - Calculer (E31) un score de vraisemblance définie par la mesure de la distance entre l'état cible de la liste « vérités terrain » $Liste_{vérités\ terrain}$, $Etat_{cible}{}^{GT}$, et l'état cible recherché dans la liste ($ID_{tracker}$, $Etat_{cible}$, date) du dictionnaire de prédictions $Dict_{prédictions}$
   - Si l'identité $ID_{tracker}$ de l'algorithme de suivi T du dictionnaire de prédictions $Dict_{prédictions}$ est différent de l'identité $ID_{meilieurTracker}$ de l'algorithme de suivi T de la liste « vérités terrain » $Liste_{vérités\ terrain}$ et que le score de vraisemblance calculé est inférieur à une valeur seuil prédéterminé, alors ;
   - Mettre à jour (E32) la zone d'échecs $S_{fail}{}^T$ de l'algorithme de suivi T en y rajoutant le vecteur de métriques $Sit_{cible}$ calculé dans l'étape de détermination d'algorithme de suivi T en zone de référence et compris dans l'élément élément ($ID_{cible}$, $ID_{meilleurTracker}$, $Etat_{cible}{}^{GT}$, $Sit_{cible}$, date) de la liste « vérités terrain » $Liste_{vérités}\ terrain$

5. Dispositif de calibrage (1) d'un système de suivi mono ou multi-cible(s) **caractérisé en ce qu'**il comprend au moins une mémoire pour stocker un ensemble de programmes et au moins une unité de calcul pour exécuter les dits programmes pour réaliser les étapes du procédé de calibrage selon l'une quelconque des revendications précédentes et mémoriser les résultats des calculs dans les listes, (Liste$_{vérités}$ terrains, Liste du dictionnaire de prédictions $Dict_{prédictions}$ contenant chaque triplet (ID$_{tracker}$, Etat$_{cible}$, date) d'une cible ID$_{cible}$), les dictionnaires de prédictions, la zone de référence $S_{ref}^T$ ou la zone d'échecs $S_{fail}^T$ connue de l'algorithme de suivi T pour chaque dispositif de suivi (tracker) d'une pluralité de dispositif de suivi du système de suivi, chaque dispositif de suivi comprenant au moins un algorithme de suivi T.

**6.** Utilisation du procédé de calibrage d'un système de suivi collaboratif mono ou multi-cible(s) selon une des revendications 1 à 4 **caractérisé en ce que** le flux d'images d'un serveur de flux vidéo (SFV) est envoyé, d'une part sur un dispositif de détection d'objet (RFCN) pour délivrer des informations d'identification de nouvelles cibles à chacun des dispositif de suivi mono cible DT$_{MIL}$ et DT$_{KCF}$ exécutant des algorithmes de suivi de type MIL (Multiple Instance Learning) et KCF (kernelized corrélation filter), d'autre part à chacun des dispositif de suivi DT$_{MIL}$ et DT$_{KCF}$ dont les signaux de sortie sont envoyés pour traitement par le dispositif de calibrage (1), selon la revendication 5, mettant en oeuvre le procédé de calibrage, selon les revendications 1 à 4, et comprenant un dispositif (DRCTS) exécutant une routine principale de suivi collaboratif et dialoguant d'une part avec un calculateur (CS) de situations pour obtenir le vecteur de métriques $Sit_{cible}$ calculé pour chaque nouvelle cible et avec un gestionnaire (GZE) des zones d'échecs $S_{fail}^T$ connues pour fournir cette information à un dispositif de suivi principal (DTP) élaborant le résultat du suivi à partir de l'information transmise par GZE et des informations transmises par le dispositif de suivi DT$_{MIL}$ ou DT$_{KCF}$.

**7.** Utilisation du procédé de calibrage d'un système de suivi collaboratif mono ou multi-cible(s) selon une des revendications 1 à 4 **caractérisé en ce que** le flux d'images d'un serveur de flux vidéo est envoyé, d'une part sur un dispositif de suivi multi-cible DT$_{MHT}$ exécutant un algorithme de suivi de type MHT (Multiple Hypothesis Tracking) et un dispositif de détection d'objet (RFCN) pour délivrer des informations d'identification de nouvelles cibles au dit dispositif de suivi multi-cible DT$_{MHT}$, d'autre part à chacun de deux ensembles de pluralité de dispositifs de suivi DT$_{MIL}$ et DT$_{KCF}$ exécutant des algorithmes de suivi de type MIL ( Multiple Instance Learning) et KCF (kernelized corrélation filter), le dispositif de suivi multi-cible DMHT transmettant des informations d'initialisation de cibles comprenant au moins les coordonnées desdites cibles à chacun des deux ensembles de pluralité de dispositifs de suivi DT$_{MIL}$ et DT$_{KCF}$, les signaux de sortie de chacun des dispositifs de suivi DT$_{MHT}$, DT$_{MIL}$, DT$_{KCF}$ sont envoyés pour traitement par le dispositif de calibrage (1), selon la revendication 5, mettant en oeuvre le procédé de calibrage, selon les revendications 1 à 4, et comprenant un dispositif (DRCTS) exécutant la routine principale de suivi collaboratif (RCTS) et dialoguant d'une part avec un calculateur (CS) de situations (Sit) pour obtenir le vecteur de métriques $Sit_{cible}$ calculé pour chaque nouvelle cible et avec un gestionnaire (GZE) des zones d'échecs $S_{fail}^T$ connues pour fournir cette information à un dispositif de suivi principal (DTP) élaborant le résultat du suivi à partir de l'information transmise par GZE et des informations transmises par chaque dispositif de suivi DT$_{MHT}$, DT$_{MIL}$ ou DT$_{KCF}$.

**Patentansprüche**

**1.** Verfahren zum Kalibrieren eines kollaborativen Systems zum Verfolgen einzelner oder mehrerer Ziele, das mindestens eine Anordnung von Verfolgungsalgorithmen T aufweist, die durch mindestens einen Prozessor ausgeführt werden, um die Informationen, die aus einem Bildstrom stammen, für die Erkennung von Zielen in dem Strom von Videobildern zu verarbeiten, der mindestens durch eine gegebene Kamera des Verfolgungssystems erfasst wird, entsprechend einem gegebenen Betrachtungspunkt einer zu überwachenden Szene, wobei jeder Verfolgungsalgorithmus T mindestens eine bekannte Referenzzone $S_{Ref}^T$, die alle Situationen repräsentiert, für die der Algorithmus ein reales Ziel erkennt, und mindestens eine bekannte Abbruchzone $S_{Fehl}^T$ nutzt, die eine Anordnung von Situationen darstellt, für die der Verfolgungsalgorithmus kein reales Ziel erkennt, wobei das System zum Verfolgen einzelner oder mehrerer Ziele mindestens eine Anordnung von Modulen/Programmen, die in einem Speicher aufgezeichnet sind, und mindestens einen Prozessor umfasst, der eine Anordnung von Modulen zum Implementieren des Kalibrierungsverfahrens ausführt,
**dadurch gekennzeichnet, dass** es mindestens die folgenden Schritte umfasst:

- Sammeln (E1) der Zuordnungen sämtlicher der Verfolgungsalgorithmen T des Systems zum Verfolgen einzelner oder mehrerer Ziele, um ein Vorhersagewörterbuch $Wört_{Vorhersagen}$ für ein gegebenes Ziel zu erstellen;
- Bestimmen (E2), über das erstellte Vorhersagewörterbuch $Wört_{Vorhersagen}$, der Verfolgungsalgorithmen T in der Referenzzone zum Erstellen einer "Ground-Truths"-Liste $Liste_{Ground\ Truths}$, umfassend die Verfolgungsalgorithmen T, die einen Konfidenzwert aufweisen, der größer als ein vordefinierter Schwellenwert ist;
- Aktualisieren (E3) der bekannten Abbruchzone jedes Verfolgungsalgorithmus T der Liste der Verfolgungsalgorithmen T des Systems zum Verfolgen einzelner oder mehrerer Ziele, die nicht Teil der "Ground Truths"-Liste $Liste_{Ground\ Truths}$ ist und einen Wahrscheinlichkeitswert besitzen, der kleiner als ein vorbestimmter Schwellenwert ist.

2. Verfahren zum Kalibrieren eines kollaborativen Systems zum Verfolgen einzelner oder mehrerer Ziele nach Anspruch 1, **dadurch gekennzeichnet, dass** der Schritt des Sammelns von Verfolgungsalgorithmuszuordnungen mindestens besteht aus:
für jeden Verfolgungsalgorithmus T:

- Vorhersagen (E10), aus dem Videobildstrom, der Zustände eines Ziels oder einer Anordnung von Zielen, die in den Bildströmen enthalten sind, um ein Vorhersagewörterbuch $Wörtv_{orhersagen}^{T}$ zu erstellen, das mit dem Verfolgungsalgorithmus T verbunden ist, wobei das Vorhersagewörterbuch $Wort_{Vorhersagen}^{T}$ als Eingabe eine bestehende oder neue Zielkennung $ID_{Ziel}$ nimmt und bei Ausgabe als Wert einen Vektor ausgibt, der den Zustand des neuen, als $Zustand_{Ziel}$ bezeichneten, Ziels kennzeichnet;
- für jedes Triplett ($ID_{Ziel}$, $Zustand_{Ziel}$, Datum), das in dem Vorhersagewörterbuch $Wört_{Vorhersagen}^{T}$ des Verfolgungsalgorithmus T eingeschlossen ist, Erstellen (E11) des Vorhersagewörterbuchs $Wort_{Vorhersagen}$ für ein gegebenes Ziel bei Hinzufügen des Tripletts ($ID_{Verfolgungseinrichtung}$, $Zustand_{Ziel}$, Datum) auf eine Liste, wobei das Vorhersagewörterbuch $Wört_{Vorhersagen}$ für ein gegebenes Ziel als Eingabe die Kennung des Ziels $ID_{Ziel}$ nimmt und als Ausgabewert eine Liste von Triplets ($ID_{Verfolgungseinrichtung}$, $Zustand_{Ziel}$, Datum) ausgibt, wobei $ID_{Verfolgungseinrichtung}$ die Kennung des Verfolgungsalgorithmus T ist und das Datum der Wert des Datums ist, an dem die Erkennung des Ziels durch den Verfolgungsalgorithmus T durchgeführt wurde;

3. Verfahren zum Kalibrieren eines Systems zum Verfolgen einzelner oder mehrerer Ziele nach den Ansprüchen 1 und 2, **dadurch gekennzeichnet, dass** der Schritt des Bestimmens (E2) der Verfolgungsalgorithmen T in der Referenzzone umfasst:
für jedes Ziel $ID_{Ziel}$ und jede Triplettliste ($ID_{Verfolgungseinrichtung}$, $Zustand_{Ziel}$, Datum) in dem Vorhersagewörterbuch eines Ziels $Wört_{Vvorhersagen}$:

- Berechnen (E20) eines Vektors von Metriken $Sit_{Ziel}$ des Ziels, wobei der metrische Vektor die Situation des Ziels $ID_{Ziel}$ kennzeichnet;
- Überprüfen, ob der metrische Vektor $Sit_{Ziel}$ zu der Referenzzone $S_{Ref}^{T}$ des Verfolgungsalgorithmus T gehört;
- falls ja, Hinzufügen des Quintupletts ($ID_{Ziel}$, $ID_{besteVerfolgungseinrichtung}$, $Zustand_{Ziel}$, $Sit_{Ziel}$, Datum) in eine Liste zum Erstellen (E21) der "Ground-Truths"-Liste $Liste_{Ground\ Truths}$, wobei die $ID_{besteVerfolgungseinrichtung}$ den Verfolgungsalgorithmus T der Liste der in dem Vorhersagewörterbuch $Wört_{Vorhersagen}$ eingeschlossenen Triplets bezeichnet und den höchsten Konfidenzwert bei der Berechnung der Situation besitzt, **gekennzeichnet durch** den Vektor der Metriken $Sit_{Ziel}$, im Vergleich zu den anderen Werten, die durch die anderen Algorithmen des Vorhersagewörterbuchs erhalten wurden

4. Verfahren zum Kalibrieren eines Systems zum Verfolgen einzelner oder mehrerer Ziele nach den Ansprüchen 1 und 2, **dadurch gekennzeichnet, dass** der Schritt zum Aktualisieren (E3) umfasst:
für jedes Element ($ID_{Ziel}$, $ID_{besteVerfolgungseinrichtung}$, $Zustand_{Ziel}^{GT}$, $Sit_{Ziel}$, Datum) der "Ground Truths"-Liste $Liste_{Ground\ Truths}$ mindestens einer der Schritte besteht aus:

- Suchen (E30), in dem Vorhersagewörterbuch, nach einem gegebenen Ziel $Wörtv_{orhersagen}$, der Vorhersage für den Verfolgungsalgorithmus T mit der Kennung $ID_{Verfolgungseinrichtung}$ und dem Ziel $ID_{Zie}$, an dem gegebenen Datum, wobei die Vorhersage dem Zielzustand $Zustand_{Ziel}$ in der Liste ($ID_{Verfolgungseinrichtung}$, $Zustand_{Ziel}$, Datum) des Vorhersagewörterbuchs $Wört_{Vorhersagen}$ entspricht,
- Berechnen (E31) eines Wahrscheinlichkeitswerts, der durch die Messung des Abstands zwischen dem Zielzustand der "Ground Truths"-Liste $Liste_{Ground\ Truths}$, dem $Zustand_{Ziel}^{GT}$ und dem in der Liste gesuchten Zielzustand ($ID_{Verfolgungseinrichtung}$, $Zustand_{Ziel}$, Datum) des Vorhersagewörterbuchs $Wört_{Vorhersagen}$ definiert wird
- falls die Identität $ID_{Verfolgungseinrichtung}$ des Verfolgungsalgorithmus T des Vorhersagewörterbuchs $WÖrt_{Vorhersagen}$ sich von der Identität $ID_{besteVerfolgungseinrichtung}$ des Verfolgungsalgorithmus T der "Ground Truths"-Liste $Liste_{Ground\ Truths}$ unterscheidet und der berechnete Wahrscheinlichkeitswert kleiner als ein vorbestimmter Schwellenwert ist, dann;
- Aktualisieren (E32) der Abbruchzone $S_{Fehl}^{T}$ des Verfolgungsalgorithmus T durch Hinzufügen des Vektors der Metriken $Sit_{Ziel}$, der in dem Schritt der Bestimmung des Trackingalgorithmus T in der Referenzzone berechnet wird und in dem Elementelement ($ID_{Ziel}$, $ID_{besteVerfolgungseinrichtung}$, $Zustand_{Ziel}^{GT}$, $Sit_{Ziel}$, Datum) der "Ground Truths"-Liste *Liste*$_{Ground\ Truths}$ umfasst ist

5. Kalibriervorrichtung (1) für ein System zum Verfolgen einzelner oder mehrerer Ziele, **dadurch gekennzeichnet, dass** es mindestens einen Speicher zum Speichern einer Anordnung von Programmen und mindestens eine Berechnungseinheit zum Ausführen dieser Programme umfasst, um die Schritte des Kalibrierungsverfahrens nach einem der vorstehenden Ansprüche zu implementieren und die Ergebnisse der Berechnungen in den Listen zu speichern, (Liste$_{Ground\ Truths}$, Liste des Vorhersagewörterbuchs *Wört*$_{Vorhersagen}$, die jedes Triplett (ID$_{Verfolgungseinrichtung}$, Zustand$_{Ziel}$, Datum) eines Ziels ID$_{Ziel}$ enthält), die Vorhersagewörterbücher, die Referenzzone S$_{Ref}^{T}$ oder die bekannte Abbruchzone S$_{Fehl}^{T}$ des Verfolgungsalgorithmus T für jede Verfolgungsvorrichtung (Verfolgungseinrichtung) einer Vielzahl von Verfolgungsvorrichtungen des Verfolgungssystems, wobei jede Verfolgungsvorrichtung mindestens einen Verfolgungsalgorithmus T umfasst.

6. Verwendung des Verfahrens zum Kalibrieren eines kollaborativen Systems zum Verfolgen einzelner oder mehrerer Ziele nach einem der Ansprüche 1 bis 4, **dadurch gekennzeichnet, dass** der Bildstrom eines Videostromservers (SFV) einerseits an eine Objekterkennungsvorrichtung (RFCN) gesendet wird, um Identifizierungsinformationen neuer Ziele an jede der Vorrichtungen zum Verfolgen einzelner Ziele DT$_{MIL}$ und DT$_{KCF}$, die die Verfolgungsalgorithmen des Typs MIL (Multiple Instance Learning) und KCF (Kernelized Correlation Filter) ausführen, andererseits an jede der Verfolgungsvorrichtungen DT$_{MIL}$ und DT$_{KCF}$ zu liefern, deren Ausgangssignale zum Verarbeiten durch die Kalibrierungsvorrichtung (1) nach Anspruch 5 gesendet werden, die das Kalibrierungsverfahren nach den Ansprüchen 1 bis 4 implementiert, und umfassend eine Vorrichtung (DRCTS), die eine Hauptroutine der kollaborativen Verfolgung ausführt und einerseits mit einem Situationsrechner (CS) kommuniziert, um den Vektor der Metriken *Sit*$_{Ziel}$ zu erhalten, der für jedes neue Ziel und mit einem Verwaltungsprogramm (GZE) der bekannten Abbruchzonen S$_{Fehl}^{T}$ berechnet wird, um diese Informationen an eine Hauptverfolgungsvorrichtung (DTP) zu liefern, die das Verfolgungsergebnis aus den Informationen, die durch das GZE übermittelt werden, und den Informationen, die durch die Verfolgungsvorrichtung DT$_{MIL}$ oder DT$_{KCF}$ übermittelt werden, ausarbeitet.

7. Verwendung des Verfahrens zum Kalibrieren eines kollaborativen Systems zum Verfolgen einzelner oder mehrerer Ziele nach einem der Ansprüche 1 bis 4, **dadurch gekennzeichnet, dass** der Bildstrom eines Videostromservers einerseits an eine Vorrichtung zum Verfolgen mehrerer Ziele DT$_{MHT}$, die einen Verfolgungsalgorithmus vom Typ MHT (Multiple Hypothesis Tracking) ausführt, und eine Objekterkennungsvorrichtung (RFCN), um Identifikationsinformationen neuer Ziele an die Vorrichtung zum Verfolgen mehrerer Ziele DT$_{MHT}$ zu liefern, andererseits an jede von zwei Anordnungen einer Vielzahl von Verfolgungsvorrichtungen DT$_{MIL}$ und DT$_{KCF}$ gesendet wird, die Verfolgungsalgorithmen vom Typ MIL (Multiple Instance Learning) und KCF (Kernelized Correlation Filter) ausführen, wobei die Vorrichtung zum Verfolgen mehrerer Ziele DMHT Initialisierungsinformationen für Ziele, umfassend mindestens die Koordinaten der Ziele, an jede der zwei Anordnungen einer Vielzahl von Verfolgungsvorrichtungen DT$_{MIL}$ und DT$_{KCF}$ übermittelt, die Ausgangssignale jeder der Verfolgungsvorrichtungen DT$_{MHT}$, DT$_{MIL}$, DT$_{KCF}$ für die Verarbeitung durch die Kalibrierungsvorrichtung (1) nach Anspruch 5 gesendet werden, die das Kalibrierungsverfahren nach den Ansprüchen 1 bis 4 implementiert und umfassend eine Vorrichtung (DRCTS), die die Hauptroutine für die kollaborative Verfolgung (RCTS) ausführt und einerseits mit einem Rechner (CS) von Situationen (Sit) kommuniziert, um den Vektor der Metriken *Sit*$_{Ziel}$ zu erhalten, der für jedes neue Ziel und mit einem Verwaltungsprogramm (GZE) der bekannten Abbruchzonen S$_{Fehl}^{T}$ berechnet wird, um diese Informationen an eine Hauptverfolgungsvorrichtung (DTP) zu liefern, die das Verfolgungsergebnis aus den Informationen, die durch das GZE übermittelt werden, und den Informationen, die durch jede Verfolgungsvorrichtung DT$_{MHT}$, DT$_{MIL}$ oder DT$_{KCF}$ übermittelt werden, ausarbeitet.

## Claims

1. Method for calibrating a single- or multi-target collaborative tracking system comprising at least one set of tracking algorithms T executed by at least one processor for processing the information from an image stream in order to detect targets in the video image stream which is captured at least by a given camera of the tracking system, according to a given viewpoint of a scene to be monitored, each tracking algorithm T using at least one known reference zone S$_{ref}^{T}$ representing the set of situations for which the algorithm detects an actual target and at least one known failure zone S$_{fail}^{T}$ representing the set of situations for which the tracking algorithm does not detect an actual target, the single- or multi-target tracking system comprising at least one set of modules/programs stored in a memory and at least one processor executing the set of modules to implement the calibration method, said method being **characterized in that** it comprises at least the steps of:

- collecting (E1) the combinations of all the tracking algorithms T of the single- or multi-target tracking system in order to create a dictionary of predictions $Dict_{predictions}$ for a given target;

- determining (E2), by means of the created predictions dictionary $Dict_{predictions}$, the tracking algorithms T in the reference zone in order to create a "ground truths" list $List_{Ground\ truths}$ comprising the tracking algorithms T which have a confidence score greater than a predefined threshold value;

- updating (E3) the known failure zone of each tracking algorithm T of the list of tracking algorithms T of the single- or multi-target tracking system not belonging to the "ground truths" list $List_{Ground\ truths}$ and having a likelihood score below a predetermined threshold.

**2.** Method for calibrating a single- or multi-target collaborative tracking system according to claim 1, **characterized in that** the step of collecting tracking algorithm combinations consists of at least:
For each tracking algorithm T:

- predicting (E10), from the video image stream, the states of a target or a set of targets contained in the image streams in order to create a predictions dictionary $Dict_{predictions}^{T}$ linked to the tracking algorithm T, said predictions dictionary $Dict_{predictions}^{T}$ taking as input an existing or new target identifier $ID_{target}$ and giving as output as a value a vector characterizing the state of the new target, called $State_{target}$;

- for each triplet ($ID_{target}$, $State_{target}$, date) included in the predictions dictionary $Dict_{predictions}^{T}$ of the tracking algorithm T, creating (E11) the predictions dictionary $Dict_{predictions}$ for a given target by adding the triplet ($ID_{tracker}$, $State_{target}$, date) to a list, the prediction dictionary $Dict_{predictions}$ for a given target taking as input the target identifier $ID_{target}$ and giving as the output value a triplet list ($ID_{tracker}$, $State_{target}$, date) where $ID_{tracker}$ is the identifier of the tracking algorithm T and date is the value of the date on which the target was detected by the tracking algorithm T.

**3.** Method for calibrating a single- or multi-target tracking system according to claims 1 and 2, **characterized in that** the step (E2) of determining tracking algorithms T in a reference zone comprises:
For each target $ID_{target}$ and triplet list ($ID_{tracker}$, $State_{target}$, date) in the predictions dictionary $Dict_{predictions}$ of a target:

- calculating (E20) a metrics vector $Sit_{target}$ of the target, the metric vector characterizing the situation of the target $ID_{target}$;

- checking whether the metric vector $Sit_{target}$ belongs to the reference zone $S_{ref}^{T}$ of the tracking algorithm T;

- if yes, adding the quintuplet ($ID_{target}$, $ID_{bestTracker}$, $State_{target}$, $Sit_{target}$, date) to a list in order to create (E21) the "ground truths" list $List_{Ground\ truths}$, $ID_{bestTracker}$ designating the tracking algorithm T of the triplet list included in the predictions dictionary $Dict_{predictions}$ and having the highest confidence score, in calculating the situation **characterized by** the metrics vector $Sit_{target}$, in comparison with the other scores obtained by the other algorithms of said predictions dictionary.

**4.** Method for calibrating a single- or multi-target tracking system according to claims 1 and 2, **characterized in that** the updating step (E3) comprises:
For each element ($ID_{target}$, $ID_{bestTracker}$, $State_{target}^{GT}$, $Sit_{target}$, date) of the "ground truths" list $List_{Ground\ truths}$ at least one of the steps consisting of:

- searching (E30), in the predictions dictionary $Dict_{predictions}$ for a given target, the prediction for the tracking algorithm T with the identifier $ID_{tracker}$ and target $ID_{target}$ on the given date, the prediction corresponds to the target state $State_{target}$ in the list ($ID_{tracker}$, $State_{target}$, date) of the predictions dictionary $Dict_{predictions}$;

- calculating (E31) a likelihood score defined by measuring the distance between the target state of the "ground truths" list $List_{Ground\ truths}$, $State_{target}^{GT}$, and the target state searched in the list ($ID_{tracker}$, $State_{target}$, date) of the predictions dictionary $Dict_{predictions}$;

- if the identity $ID_{tracker}$ of the tracking algorithm T of the predictions dictionary $Dict_{predictions}$ is different from the identity $ID_{bestTracker}$ of the tracking algorithm T of the "ground truths" list $List_{Ground\ truths}$ and the calculated likelihood score is less than a predetermined threshold value, then;

- updating (E32) the failure zone $S_{fail}^{T}$ of the tracking algorithm T by adding thereto the metrics vector $Sit_{target}$ calculated in the step of determining the tracking algorithm T in the reference zone and included in the element element ($ID_{target}$, $ID_{bestTracker}$, $State_{target}^{GT}$, $Sit_{target}$, date) of the"ground truths" list $List_{Ground\ truths}$.

**5.** Calibration device (1) for a single- or multi-target tracking system, **characterized in that** it comprises at least one memory for storing a set of programs and at least one computing unit for executing said programs to carry out the steps of the calibration method according to any one of the preceding claims and to store the results of the computing calculations in the lists, ($List_{Ground\ truths}$, Predictions dictionary list $Dict_{predictions}$ containing each triplet ($ID_{tracker}$, $State_{target}$, date) of a target $ID_{target}$), the predictions dictionaries, the reference zone $S_{ref}^{T}$ or the known failure zone

$S_{fail}^T$ of the tracking algorithm T for each tracking device (tracker) of a plurality of tracking devices of the tracking system, each tracking device comprising at least one tracking algorithm T.

6. Use of the calibration method of a single- or multi-target collaborative tracking system according to one of claims 1 to 4, **characterized in that** the image stream of a video stream server (SFV) is sent both to an object detection device (RFCN) for delivering new target identification information to each of the single-target tracking devices $DT_{MIL}$ and $DT_{KCF}$ executing MIL (Multiple Instance Learning) and KCF (kernelized correlation filter) type tracking algorithms, and to each of the tracking devices $DT_{MIL}$ and $DT_{KCF}$, the output signals of which are sent for processing by the calibration device (1), according to claim 5, implementing the calibration method, according to claims 1 to 4, and comprising a device (DRCTS) executing a main collaborative tracking routine and communicating with a situations computer (CS) in order to obtain the metrics vector $Sit_{target}$ calculated for each new target and with a manager (GZE) of the known failure zones $S_{fail}^T$ in order to supply this information to a main tracking device (DTP) producing the tracking result from the information transmitted by GZE and the information transmitted by the tracking device $DT_{MIL}$ or $DT_{KCF}$.

7. Use of the calibration method of a single- or multi-target collaborative tracking system according to one of claims 1 to 4, **characterized in that** the image stream of a video stream server is sent both to a multi-target tracking device $DT_{MHT}$ executing an MHT (Multiple Hypothesis Tracking) type tracking algorithm and an object detection device (RFCN) for delivering new target identification information to said multi-target tracking device $DT_{MHT}$, and to each of two sets of a plurality of tracking devices $DT_{MIL}$ and $DT_{KCF}$ executing MIL (Multiple Instance Learning) and KCF (kernelized correlation filter) type tracking algorithms, the multi-target tracking device DMHT transmitting target initialization information comprising at least the coordinates of said targets to each of the two sets of a plurality of tracking devices $DT_{MIL}$ and $DT_{KCF}$, the output signals of each of the tracking devices $DT_{MHT}$, $DT_{MIL}$, $DT_{KC}F$ are sent for processing by the calibration device (1), according to claim 5, implementing the calibration method, according to claims 1 to 4, and comprising a device (DRCTS) executing the main collaborative tracking routine (RCTS) and communicating with a situations (Sit) computer (CS) in order to obtain the metrics vector $Sit_{target}$ calculated for each new target and with a manager (GZE) of known the failure zones $S_{fail}^T$ to supply this information to a main tracking device (DTP) producing the tracking result from the information transmitted by GZE and the information transmitted by each tracking device $DT_{MHT}$, $DT_{MIL}$ or $DT_{KCF}$.

Données sur une liste
d'algorithmes de suivi

E1

E2

E3

Mise à jour de zones d'échecs
d'algorithmes de suivi

## FIGURE 1A

Données sur une liste
d'algorithmes de suivi

E1

E10

E11

E2

## FIGURE 1B

E1

E2

E20

E21

E3

## FIGURE 1C

E2

E3

E30

E31

E32

Mise à jour de zones d'échecs
d'algorithmes de suivi

## FIGURE 1D

FIGURE 2

FIGURE 3

**FIGURE 4**